# EUROPÄISCHE PATENTSCHRIFT

(11) **EP 2 192 532 B1**
(45) Veröffentlichungstag und Bekanntmachung des Hinweises auf die Patenterteilung: **03.01.2018**
(21) Anmeldenummer: 09014473.4
(22) Anmeldetag: 20.11.2009
(51) Int. Cl.: G06K 19/10, G06Q 10/00, F01N 13/18, F02D 41/24, F02D 41/14, F02D 41/22

(54) **Vertauschungssicherheit von DPF-Abgasanlagen**
Commutation safety of DPF exhaust gas facilities
Sécurité contre l'échange d'installations de gaz d'échappement DPF

(30) Priorität: 29.11.2008 DE 102008059688
(43) Veröffentlichungstag der Anmeldung: 02.06.2010
(73) Patentinhaber: DEUTZ Aktiengesellschaft, 51149 Köln (DE)
(72) Erfinder: Lutat, Martin, 53757 St. Augustin (DE); Brardt, Jürgen, 53804 Much (DE)

(56) Entgegenhaltungen:
- EP-A1- 1 717 423
- EP-A1- 2 065 581
- EP-A2- 1 118 514
- DE-A1- 10 020 977
- JP-A- 2003 262 114
- US-A1- 2005 125 655
- US-A1- 2007 187 240

## Beschreibung

Die Erfindung betrifft eine Brennkraftmaschine, die insbesondere zum Einbau in Anwendungen wie Geräte oder Maschinen durch Kunden vorgesehen ist, mit an der Brennkraftmaschine fest verbauten Anbauteilen und weiterhin Bauteilen, die als Beipackteile der Brennkraftmaschine beigegeben sind.

Insbesondere bei Brennkraftmaschinen, die von einem Hersteller von Brennkraftmaschinen für unterschiedliche Einbaukunden an deren Bedürfnisse angepasst gebaut werden, ist es üblich, bestimmte auf die entsprechende Brennkraftmaschine abgestimmte Bauteile als Beipackteile zu der Brennkraftmaschine an den Kunden auszuliefern. Nachdem die Brennkraftmaschine von dem Kunden in ein Arbeitsgerät oder eine Arbeitsmaschine eingebaut worden ist, werden die beigepackten Bauteile - gegebenenfalls an die vorgegebenen Einbauverhältnisse mechanisch angepasst - verbaut. Ein mögliches Beispiel für ein solchermaßen beigepacktes Bauteil ist eine Abgasanlage. Eine derartige Brennkraftmaschine wird in der JP 2003 262 114 A offenbart sowie in der EP 2 065 581 A1 und in der EP 0 767 297 A.

Der Erfindung liegt die Aufgabe zugrunde, sicherzustellen, dass die einer bestimmten Brennkraftmaschine beigepackten Bauteile ausschließlich mit der zugehörigen Brennkraftmaschine verbaut werden können.

Diese Aufgabe wird dadurch gelöst, dass die Bauteile in der Form kodiert sind, dass diese ausschließlich mit der zugehörigen Brennkraftmaschine einen uneingeschränkten Betrieb der Brennkraftmaschine ermöglichenden Form verbaubar sind. Dieser Ausgestaltung liegt die Erkenntnis und gleichzeitig die Vorgabe zugrunde, dass heutzutage von einer Brennkraftmaschine verschiedene, insbesondere gesetzlich geregelte Anforderungen erfüllt werden müssen, die nur mit einer ganz bestimmten Brennkraftmaschinenabstimmung einschließlich von an die Brennkraftmaschine anzubauenden Bauteilen erfüllt werden können. Würde die Brennkraftmaschine mit nicht auf die Brennkraftmaschine speziell abgestimmten Bauteilen ausgestattet werden, wäre ein unter Umständen nicht erkennbarer fehlerhafter Gebrauch der Brennkraftmaschine möglich, der sich beispielsweise nicht in einem Leistungsabfall, sondern beispielsweise nur in nicht vorschriftskonformen Abgasemissionen äußert. Dieser Fall wird durch die erfindungsgemäße Kodierung ausgeschlossen. Dabei kann die Kodierung in mehreren Funktionsstufen ausgestaltet sein. Insbesondere mit der in weiterer Ausgestaltung vorgesehenen elektronischen Kodierung ist es in einer allgemeinsten Form möglich, vorzusehen, dass die Brennkraftmaschine, die mit einem nicht zugehörigen Bauteil ausgestattet worden ist, nicht gestartet werden kann. Dies wird dadurch erreicht, dass die elektronische Kodierung in entsprechende Steuerungen der Brennkraftmaschine eingreift. Alternativ kann es aber auch vorgesehen sein, die Brennkraftmaschinenfunktion so einzuschränken, dass diese nur mit einer beschränkten Leistung betrieben werden kann oder aber in einem Wartungsspeicher ein Eintrag erfolgt, der bei einer vorzunehmenden Wartung ausgelesen wird. Gemäss der Erfindung ist die Kodierung in einen zu den Bauteilen gehörenden Sensor integriert. Dabei ist wiederum in weiterer Ausgestaltung der Sensor ein intelligenter Sensor, der mit einem Motorsteuergerät der Brennkraftmaschine insbesondere über einen CAN-Bus kommuniziert. Ein Beispiel für einen solchen Sensor ist ein NO_{X}-Sensor.

In weiterer Ausgestaltung der Erfindung weist der Sensor bzw. eine zugehörige Elektronik einen Speicher auf, in den die Brennkraftmaschine identifizierende Daten abgelegt sind. Dieser Sensor bzw. dieser Speicher muss obligatorisch mit einem elektronischen Steuergerät der Brennkraftmaschine kommunizierend verschaltet werden und kann somit im Fehlerfall eine Meldung an das Steuergerät ausgeben. Die die Brennkraftmaschine identifizierenden Daten sind so zu verstehen, dass damit nicht unbedingt eine ganz bestimmte Baunummer einer Brennkraftmaschine identifiziert werden muss, sondern auch ein bestimmter Leistungsbereich einer Brennkraftmaschinenbaureihe gemeint sein kann. Hier ist es mit der erfindungsgemäßen Kodierung möglich, individuelle Freigaben bzw. Fehlermeldungen vorzusehen. Die Kodierung ist so gesichert, dass diese nur von berechtigten Personen lesbar und änderbar ist. Gemäss der Erfindung ist das Bauteil eine Abgasanlage mit zumindest einem Katalysator, einem Filter und wenigstens dem einen Sensor. Insbesondere bei dem aus diesen Komponenten bestehenden Bauteil ist es wichtig und notwendig, einen "passenden" Anbau an eine zugehörige Brennkraftmaschine sicherzustellen. Hier können Fehlanbauten nicht nur zu einer Nichterfüllung von gesetzlichen Vorschriften zur Einhaltung beispielsweise von bestimmten Abgasemissionen führen, sondern es können durch einen fehlerhaften Anbau an eine nicht zugehörige Brennkraftmaschine Beschädigungen von einzelnen Komponenten der Abgasanlage und/oder der Brennkraftmaschine eintreten.

Um zusätzlich beispielsweise eine visuelle Kontrollmöglichkeit zu ermöglichen, ist gemäss der Erfindung vorgesehen, die Abgasanlage durch eine Produktionseinrichtung zusätzlich identifizierbar auszugestalten. Hierzu gehören beispielsweise Typenschilder, Farbmarkierungen oder auch mechanisch konstruktive Einrichtungen, die eine Identifizierbarkeit gewährleisten. Diese Identifizierbarkeit bezieht sich auch auf einzelne Teile des Bauteils, also insbesondere der Abgasanlage. Ein Beispiel ist die Kombination des Sensors mit dem zugehörigen Katalysator und Filter.

Weitere vorteilhafte Ausgestaltungen der Erfindung sind der Zeichnungsbeschreibung zu entnehmen, in der ein in der Fig. dargestelltes Ausführungsbeispiel der Erfindung näher beschrieben ist.

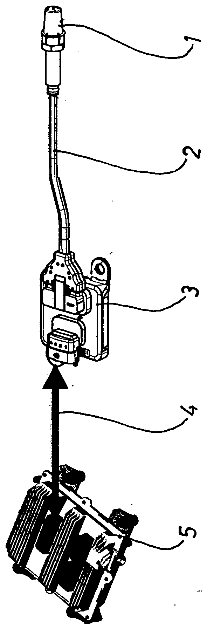

Die einzige Figur zeigt einen Sensor 1 in Form eines NOₓ-Sensors, der über eine Datenleitung 2 mit einer Sensoraufbereitungselektronik 3 verschaltet ist. Die Sensoraufbereitungselektronik 3 ist ihrerseits über eine serielle Datenschnittstelle 4 in Form eines CAN-Busses mit dem elektronischen Steuergerät 5 der Brennkraftmaschine verschaltet. In der Sensoraufbereitungselektronik 3 beziehungsweise einem darin befindlichen Speicher ist ein Kode (Daten) mit Angaben zu dem Sensor 1 und der zugehörigen - nicht dargestellten - Abgasanlage mit zumindest einem Katalysator und einem Partikelfilter gespeichert, der zur Identifizierung der zugehörigen Brennkraftmaschine identifizierende Daten dient und der von dem Steuergerät 5 ausgelesen werden kann. Der Sensor 1 ist zudem mit einer Produktionseinrichtung zusätzlich identifizierbar ausgestaltet, die eine Zuordnung zu der passenden Abgasanlage ermöglicht. Hierzu gehören beispielsweise Typenschilder, Farbmarkierungen oder auch mechanisch konstruktive Einrichtungen.

### Bezugszeichenliste

- 1: Sensor
- 2: Datenleitung
- 3: Sensoraufbereitungselektronik
- 4: Datenschnittstelle
- 5: Steuergerät

## Patentansprüche

1. Brennkraftmaschine, die insbesondere zum Einbau in Anwendungen wie Geräte oder Maschinen durch Kunden vorgesehen ist, mit an der Brennkraftmaschine fest verbauten Anbauteilen und weiterhin Bauteilen. die als Beipackteile der Brennkraftmaschine beigegeben sind, wobei die Bauteile in der Form kodiert sind, dass diese ausschließlich mit der zugehörigen Brennkraftmaschine verbaubar sind, wobei die Abgasanlage durch eine Produktionseinrichtung zusätzlich identifizierbar ist, hierzu gehören Typenschilder, Farbmarkierungen oder auch mechanisch konstruktive Einrichtungen, und **dadurch gekennzeichnet, dass** das Bauteil eine Abgasanlage mit zumindest einem Katalysator, einem Filter und wenigstens dem einen Sensor (1) ist, wobei die Kodierung in einen zu den Bauteilen gehörenden Sensor (1) integriert ist.

2. Brennkraftmaschine nach Anspruch 1,
**dadurch gekennzeichnet, dass** die Kodierung eine elektronische Kodierung ist.

3. Brennkraftmaschine nach Anspruch 1,
**dadurch gekennzeichnet, dass** der Sensor (1) ein intelligenter Sensor ist, der mit einem Steuergerät (5) der Brennkraftmaschine insbesondere über einen CAN-Bus kommuniziert.

4. Brennkraftmaschine nach Anspruch 1 oder 3,
**dadurch gekennzeichnet, dass** der Sensor (1) beziehungsweise eine zugehörige Sensoraufbereitungselektronik (3) einen Speicher aufweist, in den die Brennkraftmaschine identifizierende Daten abgelegt sind.

5. Brennkraftmaschine nach einem der Ansprüche 1 bis 4,
**dadurch gekennzeichnet, dass** der Sensor (1) beziehungsweise der Speicher mit einem elektronischen Steuergerät (5) der Brennkraftmaschine kommuniziert und im Fehlerfall eine Meldung an das Steuergerät (5) ausgibt.

## Claims

1. Internal combustion engine which is provided, in particular, for installation in applications such as devices or machines by customers, having attachments which are permanently installed on the internal combustion engine, and also components which are added as accessory parts of the internal combustion engine, wherein the components are encoded in such a way that they can be installed exclusively with the associated internal combustion engine, wherein the exhaust system can additionally be identified by a production device, and this includes type plates, colour markings or apparatuses in the form of mechanical structures, **characterized in that** the component is an exhaust system with at least one catalytic converter, one filter and at least the one sensor (1), wherein the encoding is integrated into a sensor (1) which is associated with the components.

2. Internal combustion engine according to Claim 1, **characterized in that** the encoding is electronic encoding.

3. Internal combustion engine according to Claim 1, **characterized in that** the sensor (1) is an intelligent sensor which communicates with a control device (5) of the internal combustion engine, in particular by a CAN bus.

4. Internal combustion engine according to Claim 1 or 3,
**characterized in that** the sensor (1) or associated sensor preparation electronics (3) have a memory in which data which identifies the internal combustion engine is stored.

5. Internal combustion engine according to one of Claims 1 to 4,
**characterized in that** the sensor (1) or the memory communicates with an electronic control device (5) of the internal combustion engine, and in the case of a fault outputs a message to the control device (5).

## Revendications

1. Moteur à combustion interne, lequel est notamment conçu pour une installation par des clients dans des applications telles que des appareils ou des machines, comprenant des pièces rapportées montées à demeure sur le moteur à combustion interne et en plus des éléments structuraux qui sont fournis avec le moteur à combustion interne en tant que pièces d'accompagnement, les éléments structuraux étant codés par leur forme de telle sorte que ceux-ci peuvent exclusivement être montés avec le moteur à combustion interne associé, le système d'échappement étant en plus identifiable par un dispositif de production, dont font partie des plaques signalétiques, des marquages en couleur ou aussi des dispositifs structuraux mécaniques, et **caractérisé en ce que** l'élément structural est un système d'échappement comprenant au moins un catalyseur, un filtre et et au moins le capteur (1), le codage étant intégré dans un capteur (1) qui fait partie des éléments structuraux.

2. Moteur à combustion interne selon la revendication 1, **caractérisé en ce que** le codage est un codage électronique.

3. Moteur à combustion interne selon la revendication 1, **caractérisé en ce que** le capteur (1) est un capteur intelligent qui communique avec un contrôleur (5) du moteur à combustion interne, notamment par le biais d'un bus CAN.

4. Moteur à combustion interne selon la revendication 1 ou 3, **caractérisé en ce que** le capteur (1) ou une électronique de conditionnement de capteur (3) associée possède une mémoire dans laquelle sont enregistrées des données qui identifient le moteur à combustion interne.

5. Moteur à combustion interne selon l'une des revendications 1 à 4, **caractérisé en ce que** le capteur (1) ou la mémoire communique avec un contrôleur électronique (5) du moteur à combustion interne et, en cas de défaut, délivre un message au contrôleur (5).
